Europäisches Patentamt

European Patent Office

Office européen des brevets

(11) Veröffentlichungsnummer: **0 142 624**
**B1**

(12) **EUROPÄISCHE PATENTSCHRIFT**

(45) Veröffentlichungstag der Patentschrift: **24.10.90**

(51) Int. Cl.⁵: **H 01 B 7/00, F 16 L 11/12**

(21) Anmeldenummer: **84109479.0**

(22) Anmeldetag: **09.08.84**

(54) Schlauch.

(30) Priorität: **09.09.83 DE 3332551**

(43) Veröffentlichungstag der Anmeldung:
**29.05.85 Patentblatt 85/22**

(45) Bekanntmachung des Hinweises auf die
Patenterteilung:
**24.10.90 Patentblatt 90/43**

(84) Benannte Vertragsstaaten:
**AT BE CH DE FR GB IT LI LU NL SE**

(56) Entgegenhaltungen:
**DE-A-1 775 094**
**DE-B-1 168 187**
**FR-A-2 379 143**

(73) Patentinhaber: **Continental Aktiengesellschaft**
**Königsworther Platz 1**
**D-3000 Hannover 1 (DE)**

(72) Erfinder: **Besche, Anton**
**Neuer Weg 1a**
**D-3540 Korbach (DE)**
Erfinder: **Hecker, Rolf**
**Am Schwimmbad 9**
**D-3544 Waldeck-Freienhagen (DE)**
Erfinder: **Schwarze, Klaus, Dipl.-Ing.**
**Am Taubenrain 5**
**D-3540 Korbach (DE)**

Courier Press, Leamington Spa, England.

## Beschreibung

Die Erfindung bezieht sich auf biegsame Schläuche aus Gummi oder gummiähnlichen Kunststoffen mit in die Wandung eingebetteten Verstärkungen und über die Schlauchlänge durchlaufenden elektrischen Leiterdrähten gemäß dem Oberbegriff des Patentanspruchs 1.

Es ist bekannt, elektrische Leiterdrähte für Heiz- oder Steuerungszwecke in die biegsame Schlauchwandung einzubetten, um sie im Bereich der Schlauchenden herauszuführen und über Anschlußelemente nach Belieben mit einer Stromquelle oder den zu steuernden Geräten zu verbinden. Derartige Schläuche sind z.B. in DE—A—1 168 187, FR—A—2 379 143 und FR—A—2 226 799 beschrieben. Die Erhaltung des ursprünglichen ungestörten Stromdurchgangs hat sich dabei als schwieriges Problem herausgestellt, da die als Fremdkörper innerhalb des Schlauchaufbaues anzusehenden metallischen Drähte allen Biege- und Knickbeanspruchungen der Schläuche im Gebrauch unterworfen sind, so daß sie häufig noch vor dem Auftreten äußerlich erkennbarer Schlauchschäden brechen. Als nachteilig wird daneben auch der mit dem Herstellen solcher Schläuche unvermeidlich verbundene Mehraufwand empfunden. Es bestand daher in der Praxis schon seit langem der Wunsch nach einer größere Sicherheit gegen Stromunterbrechungen vermittelnden Gestaltung und Anordnung der elektrischen Leiter und darauf fußenden Vereinfachungen in der Herstellung elektrisch leitfähiger Schläuche. Der Erfindung liegt daher die Aufgabe zugrunde, einen gattungsgemäßen Schlauch zu schaffen, bei dem die genannten Nachteile nicht auftreten.

Diese Aufgabe wird nach der vorliegenden Erfindung durch einen gattungsgemäßen Schlauch gelöst, der sich durch die im kennzeichnenden Teil des Patentanspruchs 1 angegebenen Merkmale von den vorstehend genannten bekannten Schläuchen unterscheidet, bei dem also jeweils mehrere zu Strängen zusammengefaßte Leiterdrähte in einer gesonderten Geflechtslage verlaufen, zu der die die Druck- und Biegebeanspruchungen der Schlauchwandung aufnehmende Verstärkungslage einen radialen Abstand aufweist.

Die Erfindung löst die gestellte Aufgabe in überraschend einfacher Weise durch einen neuartige Anordnung und Verteilung der elektrischen Leiterdrähte in Verbindung mit der isolierenden textilen Aufbaukomponente. Die Vereinigung jeweils mehrerer Leiterdrähte in ienem Strang sichert die Erhaltung des Stromdurchgangs auch bei Ausfall einzelner Drähte und ermöglicht gleichzeitig die Anwendung üblicher Klöppel- bzw. Flechtverfahren zum Aufbringen der kombinierten Geflechtslage aus Leiter- und Isolierdrähten auf den verstärkten Innenschlauch mit Hilfe herkömmlicher Schlauchflechtmaschinen. Die mit den Leiterdrähten gleichlaufenden Textilfäden wirken als Isoliermittel zwischen den beiderseits angrenzenden Leitersträngen, so daß sich ohne zusätzliche Maßnahmen getrennte Stromwege für die Zu- und Abführung ergeben. Die aus Textilfäden gebildeten gegenläufigen Isolierstränge stellen in ihrem die leiterdrähte wechselweise über- und unterkreuzenden Verlauf den inneren Zusammenhalt des Geflechtes und die notwendige Lagesicherung der verschiedenen Stränge untereinander her.

Zu der Druckaufnahmefähigkeit des Schlauches trägt die neuartige Textil-Metall-Einlage praktisch nichts bei. Von den hierfür allein vorgesehenen an sich bekannten Verstärkungen ist sie nicht nur räumlich getrennt, sondern auch wirkungsmäßig unabhängig.

Für die spezielle Verwendung der Leiterdrähte als Steuerleitungen bestehen sie zweckmäßig aus Kupfer oder enthalten zumindest Kupferdrähte oder Drähte aus ähnlich gut lietenden Metallen. Für Heizzwecke sind sie dagegen als Widerstandsdrähte ausgebildet.

Zum Verdeutlichen der Erfindung ist ein Ausführungsbeispiel in der Zeichnung schematisch dargestellt. Es zeigt:

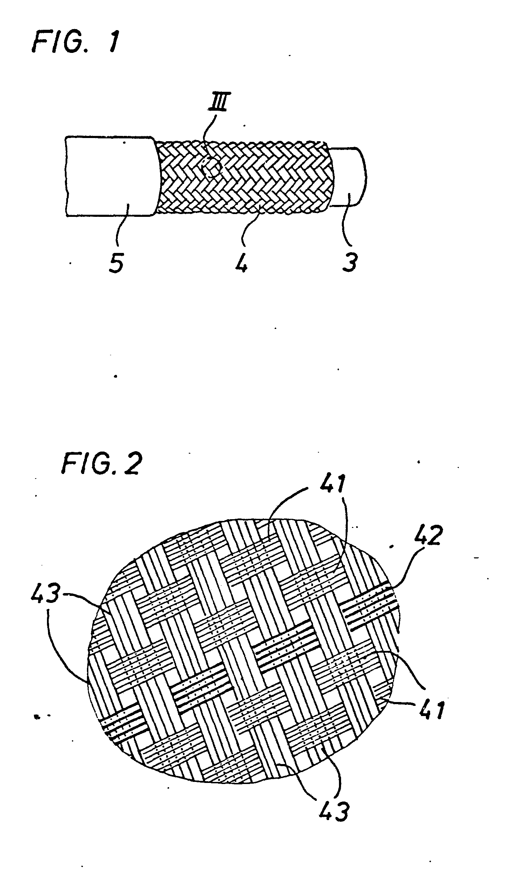

Fig. 1 ein Teilstück eines abgestuft aufgeschnittenen Schlauches in Seitenansicht und

Fig. 2 eine Ausschnittsdarstellung nach dem umrandeten Feld II in Fig. 1 in vergrößertem Maßstab.

Der gezeichnete Schlauch besteht aus einer Innenschicht 3, die aus Kautschuk mit nicht weiter dargestellten Verstärkungseinlagen aufgebaut ist, einer darauf aufgebrachten Geflechtslage 4 und einem Kautschukaußenmantel 5. Die Zusammensetzung und Einstellung der Kautschukmischung für die verschiedenen Schlauchschichten, sind in üblicher Weise den jeweiligen Einsatzbedingungen des Schlauches angepaßt. Sie sind ebenso wie der Aufbau der Innenschicht 3 und die Art und Anordnung ihrer Verstärkungseinlagen für die Erfindung ohne Bedeutung.

Die Geflechtslage 4 ist aus in spitzem Winkel zur Schlauchlängsachse ausgerichteten Leiterdrahtsträngen 41 in Aufeinanderfolge mit jeweils einem Textilfadenstrang 42 und mit diesen in gekreuzter Anordnung verflochtenen Textilsträngen 43 zusammengesetzt. Die aus mehreren Leiterdrähten beispielsweise aus Kupfer bestehenden Leiterdrahtstränge 41 sind, einem mehrgängigen Gewinde vergleichbar, gruppenweise zu jeweils mehreren nebeneinander vorgesehen, wobei ein Textilstrang 42 die Gruppen voneinander trennt und elektrisch isoliert. Die zusätzlichen Stränge 43 bestehen ausschießlich aus. Textilfäden und sind im Gegenwinkel zu den mit ihnen verflochtenen Strängen 41, 42 ausgerichtet.

## Patentansprüche

1. Biegsamer Schlauch aus Gummi oder gummiähnlichen Kunststoffen mit in die Wandung eingebetteten textilen Verstärkungen, wobei zu Heizungs- oder Steuerungszwecken mindestens zweipolig über die Schlauchlänge durchlaufende elektrische Leiterdrähte mit Strängen aus Textilfäden derart verflochten sind, daß die Leiterdrähte unter einem Schrägwinkel gegen die Schlauchlängschse eingebracht und die Textilfäden teilweise parallel zu den Leiterdrähten, teilweise unter einem gleich großen, aber entgegengesetzten Schrägwinkel verlaufen, dadurch gekennzeichnet, daß er zusätzlich zu einer Innenschicht (3), die die üblichen Verstärkungen zur Aufnahme der durch den Schlauchinnendruck verursachten Kräfte enthält, eine diese Innenschicht (3) in radialem Abstand zu deren Verstärkungen umgebende, aus Leiterdrähten und Textilfäden gebildete Geflechtslage (4) aufweist, in der Leiterdraht-Stränge (41), die jeweils mehrere Leiterdrähte enthalten, sowie zu diesen parallele, benachbarte Leiterdraht-stränge (41) gegeneinander elektrisch isolierende Textilfaden-Stränge (42), die jeweils mehrere Textilfäden enthalten, mit aus jeweils mehreren Textilfäden bestehenden Textilfaden-Strängen (43) derart verflochten sind, daß die Leiterdraht-Stränge (41) und die Textilfaden-Stränge (42) die eine Schlagrichtung und die Textilfadenstränge (43) die andere Schlagrichtung der Geflechtslage (4) bilden, wobei die durch die Textilfäden-Stränge (42) gegeneinander isolierten Leiterdraht-Stränge (41) von einem Schlauchende zum anderen durchgängige, getrennte Stromwege bilden.

2. Schlauch nach Anspruch 1, dadurch gekennzeichnet, daß die Leiterdraht-Stränge (41) aus Kupferdrähten gebildet sind oder Kupferdrähte enthalten.

3. Schlauch nach Anspruch 1, dadurch gekennzeichnet, daß die Leiterdraht-Stränge (41) aus Widerstandsdrähten gebildet sind.

**Revendications**

1. Tuyau souple en caoutchouc ou matière plastique analogue au caoutchouc, comprenant des renforcements textiles noyés dans sa paroi, et dans lequel, pour un chauffage ou une commande, des fils conducteurs électriques, qui s'étendent en une disposition au moins bipolaire sur toute la longueur du tuyau et qui peuvent être connectés à des éléments de connexion aux extrémités du tuyau, sont tressés avec des faisceaux de fils textiles de manière que les fils conducteurs soient disposés selon un angle d'inclinaison par rapport à l'axe longitudinal du tuyau et que les fils textiles soient disposés en partie parallèlement aux fils conducteurs et en partie selon un angle d'inclinaison de même valeur mais opposé, caractérisé en ce qu'il comprend, en supplément d'une couche intérieure (3), qui contient les renforcements habituels destinés à absorber les forces développées par la pression intérieure du tuyau, une couche tressée (4), qui entoure cette couche intérieure (3) à un certain écartement radial des renforcements de cette couche, et qui est formée de fils conducteurs et de fils textiles, dans laquelle des faisceaux de fils conducteurs (41), qui contiennent chacun plusieurs fils conducteurs, ainsi que des faisceaux de fils textiles (42), parallèles à ces fils conducteurs, qui contiennent chacun plusieurs fils textiles et qui isolent électriquement les uns des autres les faisceaux de fils conducteurs (41) adjacents, sont tressés avec des faisceaux de fils textiles (43) composés chacun de plusieurs fils textiles, de telle manière que les faisceaux de fils conducteurs (41) et les faisceaux de fils textiles (42) forment un sens de pose et les faisceaux de fils textiles (43) l'autre sens de pose de la couche tressée (4), les faisceaux de fils conducteurs (41) qui sont isolés les uns des autres par les faisceaux de fils textiles (42) formant des circuits conducteurs distincts, qui s'étendent d'une extrémité du tuyau à l'autre.

2. Tuyau selon la revendication 1, caractérisé en ce que les faisceaux de fils conducteurs (41) sont constitués par des fils de cuivre ou contiennent des fils de cuivre.

3. Tuyau selon la revendication 1, caractérisé en ce que les faisceaux de fils conducteurs (41) sont constitués par des fils résistants.

**Claims**

1. Flexible tube formed from rubber or rubberlike plastics materials, having textile reinforcements embedded in the wall, wherein, for heating or control purposes, electric conductor wires, which extend beyond the length of the tube at least in a bipolar manner and are connectable to connecting elements at the ends of the tube, are interwoven with strands of textile filaments in such a manner that the conductor wires are inserted at an inclined angle relative to the longitudinal axis of the tube, and the textile filaments extend partially parallel to the conductor wires and partially at the same inclined angle, but the inclination is in the opposite direction, characteried in that, in addition to having an inner layer (3), which contains the conventional reinforcements for the absorption of the forces caused by the internal pressure of the tube, the tube comprises a plaited ply (4), which surrounds this inner layer (3) at a radial spacing from its reinforcements and is formed from conductor wires and textile filaments, said plaited ply containing conductor wire strands (41), which each contain a plurality of conductor wires, as well as textile filament strands (42), which lie parallel to said conductor wires and electrically insulate adjacent conductor wire strands (41) from one another, each textile filament strand (42) containing a plurality of textile filaments, which strands (41) and (42) are interwoven with textile filament strands (43), which are each formed from a plurality of textile filaments, in such a manner that the conductor wire strands (41) and the textile filament strands (42) form one lay direction, and the textile filament strands (43) form the other lay direction of the plaited ply (4), wherein the conductor wire strands (41), which are insulated from one another by means of the textile filament strands (42), form separate current paths, which extend from one end of the tube to the other.

2. Tube according to claim 1, characterised in that the conductor wire strands (41) are formed from copper wires or contain copper wires.

3. Tube according to claim 1, characterised in that the conductor wire strands (41) are formed from resistance wires.

## FIG. 1

## FIG. 2